# EUROPEAN PATENT SPECIFICATION

(11) **EP 4 155 096 B1**
(45) Date of publication and mention of the grant of the patent: **17.12.2025**
(21) Application number: 21833030.6
(22) Date of filing: 24.06.2021
(51) Int. Cl.: B60C 9/08, B60C 19/08, B60C 9/04

(54) **PNEUMATIC TIRE**
LUFTREIFEN
PNEUMATIQUE

(30) Priority: 29.06.2020 JP 2020111763
(43) Date of publication of application: 29.03.2023
(73) Proprietor: Sumitomo Rubber Industries, Ltd., Kobe-shi, Hyogo 651-0072 (JP); SUMITOMO ELECTRIC INDUSTRIES, LTD., Osaka-shi, Osaka 541-0041 (JP)
(72) Inventor: OKABE, Noboru, Kobe-shi, Hyogo 651-0072 (JP); SUZUKI, Masumi, Kobe-shi, Hyogo 651-0072 (JP); NAKAJIMA, Tetsuya, Osaka-shi, Osaka 541-0041 (JP); IZUMIDA, Hiromu, Osaka-shi, Osaka 541-0041 (JP)
(74) Representative: Manitz Finsterwald Patent- und Rechtsanwaltspartnerschaft mbB
(86) International application number: PCT/JP2021/023985
(87) International publication number: WO 2022/004552

(56) References cited:
- EP-A1- 3 088 215
- EP-A1- 3 403 854
- EP-A1- 3 484 730
- JP-A- 2010 047 200
- JP-A- 2016 078 742
- JP-A- 2017 043 122
- JP-A- 2017 043 122
- JP-A- 2019 081 401
- JP-A- 2019 522 738
- JP-A- H03 169 711
- US-A1- 2020 122 510

## Description

### FIELD OF THE INVENTION

The present invention relates to a pneumatic tire.

### BACKGROUND OF THE INVENTION

In general, low conductivity of pneumatic tires can cause static electricity to build up in the vehicle, which may cause radio disturbance such as radio noise. Especially in recent years, the electrical resistance of tread rubber and the like tends to increase due to the demand for low fuel consumption.

In order to improve the conductivity of the tire, for example, JP 2014-133467 A proposes a pneumatic tire provided with an electroconductive thread extending in a toroidal manner between a pair of bead cores.

WO 2018/011001 A1 discloses a pneumatic tire according to the preamble of claim 1. The tire has a carcass that has a carcass ply with carcass cords. An electrically conductive yarn is provided and arranged on a radially inner surface of the carcass ply. The electrically conductive yarn comprises first and second yarns, with the second yarn being made for example of cotton, and the first yarn consisting of a plurality of stainless steel fibers.

EP 3 403 854 A1 discloses another related pneumatic tire having a composite fiber containing a conductive fiber and a non-conductive fiber.

### SUMMARY OF THE INVENTION

### Problem to be solved by the invention

The conductive thread mentioned above may be broken due to repeated deformation during running of the tire or due to local deformation of a tread portion and sidewall portions when the tire rides on a bump on the road surface, therefore, improvement has been demanded.

The present invention has been made in view of the above, and a primary object thereof is to provide a pneumatic tire capable of suppressing breakage of the electroconductive thread.

### Means to solve the problem

The present invention is a pneumatic tire having the features according to claim 1.

### Effects of the invention

The pneumatic tire of the present invention can effectively suppress the breakage of the electroconductive thread by adopting the above configuration.

### BRIEF DESCRIPTION OF THE DRAWINGS

FIG. 1 is a cross-sectional view showing a pneumatic tire according to an embodiment of the present invention.
FIG. 2 is a cross-sectional view taken along line A-A of FIG. 1.
FIG. 3 is an enlarged view of a metal filament extending in a wavy shape.
FIG. 4 is a schematic cross-sectional view showing a tire electrical resistance measuring device.

### REFERENCE SIGNS LIST

- 2: tread portion
- 4: bead portion
- 6: carcass
- 6A: carcass ply
- 10: electroconductive thread
- 11: metal filament

### DETAILED DESCRIPTION OF THE INVENTION

An embodiment of the present invention will now be described in conjunction with accompanying drawings.

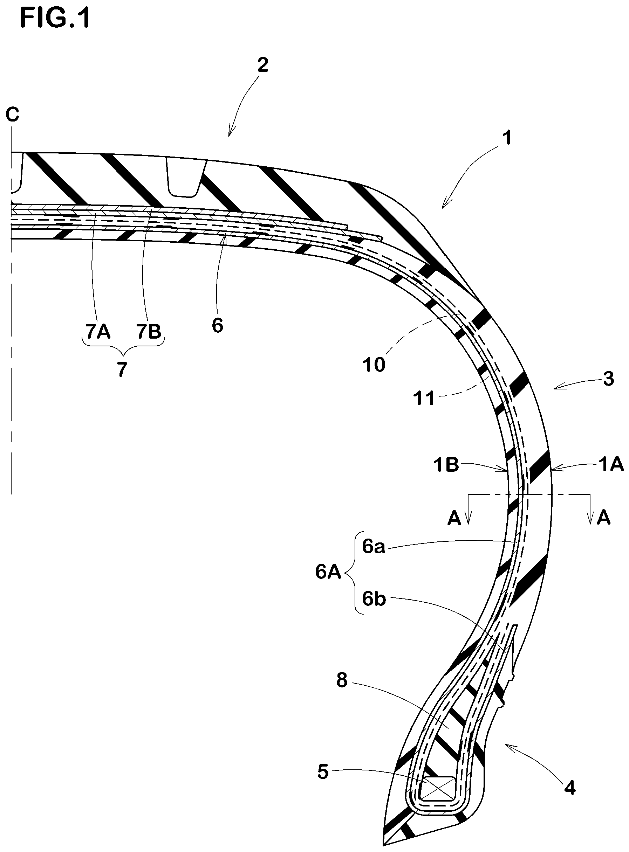

FIG. 1 is a tire meridian section passing through a tire rotational axis of a pneumatic tire 1 (hereinafter, may be simply referred to as "tire") according to the present embodiment in a standard state. It should be noted that FIG. 1 is a diagram showing a tire cross section on one side in a tire axial direction from a tire equator (C) when the tire 1 extending in an annular shape is cut along a virtual plane orthogonal to a tire circumferential direction. The tire 1 of the present embodiment is suitably used for passenger cars, for example.

The standard state refers to a state in which the tire is mounted on a standard rim, inflated to a standard inner pressure, and loaded with no tire load, in the case of a pneumatic tire for which various standards have been established. In the case of a tire or the like for which various standards have not been established, the standard state means a standard usage state for an intended purpose of use of the tire with no tire load. In the present specification, unless otherwise noted, dimensions of various parts of the tire are values measured in the standard state. It should be noted that each configuration described in the present specification allows for normal tolerances included in rubber molded products.

The term "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

The term "standard inner pressure" refers to air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

As shown in FIG. 1, the pneumatic tire 1 of the present embodiment has a carcass 6. The carcass 6 includes a carcass ply 6A with carcass cords extending from one of bead portions 4 through a tread portion 2 to the other one of the bead portions (not shown). It is needless to say that the carcass cords go through sidewall portions 3 between the bead portions 4 and the tread portion 2.

The carcass ply 6A of the present embodiment is formed of the carcass cords arranged in parallel and coated with a topping rubber, for example. The carcass 6 of the present embodiment is composed of one carcass ply 6A, but may be composed of a plurality of the carcass plies 6A.

The carcass ply 6A includes a main body portion (6a) and turned-up portions (6b), for example. The main body portion (6a) extends between the two bead portions 4, for example. Therefore, the main body portion (6a) extends at least from the tread portion 2 through the sidewall portions 3 to bead cores 5 of the bead portions 4. The turned-up portions (6b) are connected to the main body portion (6a) and each turned up around a respective one of the bead cores 5 from the inside to the outside in the tire axial direction, for example. A bead apex 8 extending outward in a tire radial direction from each of the bead cores 5 is arranged between the main body portion (6a) and a respective one of the turned-up portions (6b) to reinforce the bead portions 4 accordingly.

Organic fiber cords such as aramid and rayon are used as the carcass cords, for example. It is preferred that the carcass cords are arranged at an angle of 70 degrees or more and 90 degrees or less with respect to the tire equator (C), for example.

As a preferred form, a belt layer 7 is provided radially outside the carcass 6 in the present embodiment. The belt layer 7 is composed of two belt plies 7A and 7B stacked in the tire radial direction, for example. Each of the belt plies 7A and 7B is formed of belt cords covered with topping rubber and the belt plies are stacked in the tire radial direction so that the belt cords of one of the plies intersect with the belt cords of the other ply.

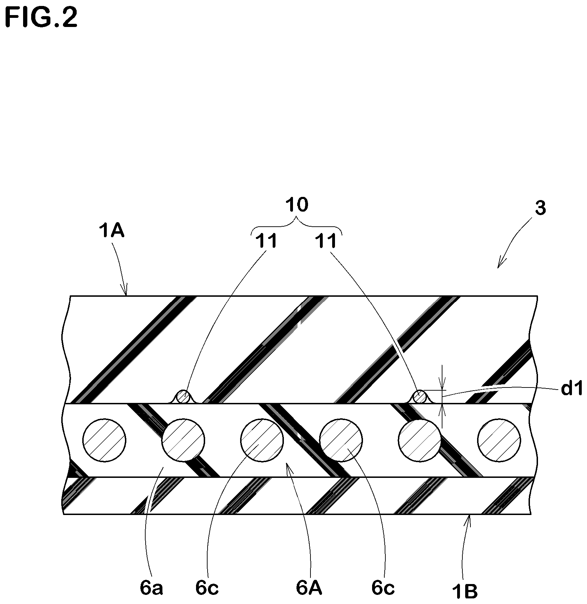

FIG. 2 shows a cross-sectional view taken along A-A line of FIG. 1. As shown in FIG. 2, the tire 1 of the present invention has at least one electroconductive thread 10 extending from one of the bead portions 4 at least to the tread portion 2 and arranged on at least one of the radially outer surface and the radially inner surface (the axially outer surface and the axially inner surface in the sidewall portions 3) of the carcass ply 6A. It should be noted that the electroconductive thread 10 is indicated by a dashed line in FIG. 1. The electroconductive thread 10 includes a metal filament 11. The metal filament 11 has a stress of 13 N or less at 1% elongation.

The stress at 1% elongation means the stress acting on the metal filament 11 when the metal filament 11 in an unloaded state is elongated by 1%. As a measuring method, a tensile tester is used to measure the stress of the metal filament 11 having a predetermined length corresponding to the length of the electroconductive thread 10 applied to the tire (the length excluding the gripping margin of the tester, for example, 300 to 800 mm) when the metal filament 11 is stretched by 1%. More specifically, it is preferred to read from a load-elongation diagram obtained according to the method for measuring the breaking load and total elongation at break described in Japanese Industrial Standard JIS G 3510.

It is possible that the pneumatic tire of the present invention effectively suppresses breakage of the electroconductive thread by adopting the above configuration. The following mechanisms can be inferred as reasons for this.

In the metal filament of the present invention, since the stress at 1% elongation is set as small as 13 N or less, the metal filament can be extended moderately by repeated deformation of the tire 1 during running and local deformations of the tread portion 2 and the sidewall portions 3 when the tire 1 rides on a bump on the road surface, therefore, there is little risk of breakage. It is assumed that breakage of the electroconductive thread 10 is suppressed due to such a function and effect.

In addition, the electroconductive thread 10 described above effectively suppresses residual air between the carcass ply 6A and other rubber members during vulcanization molding. Hereinafter, such a function and effect may be referred to as "air release property".

A more detailed configuration of the present embodiment will be described below. As shown in FIG. 1, the electroconductive thread 10 of the present embodiment extends from the bead portion 4 on one side through the sidewall portions 3 and the tread portions 2 to the bead portion (not shown) on the other side, for example. It is possible that the electroconductive thread 10 configured as such reliably increases the electrical conductivity and prevents a decrease in the electrical conductivity even when one portion is broken.

The electroconductive thread 10 is arranged on a surface of the main body portion (6a) facing a tire outer surface 1A, for example. However, the electroconductive thread 10 may be arranged on the surface of the main body portion (6a) facing a tire inner cavity surface 1B. Further, the electroconductive thread 10 is arranged on the surface of the turned-up portions (6b) facing the tire inner cavity surface 1B. Thereby, the electroconductive thread 10 is arranged so as to surround the bead cores 5 and the bead apexes 8. The electroconductive thread 10 configured as such helps improve the air release property while increasing the electrical conductivity.

It is preferred that a plurality of the electroconductive threads 10 is arranged in the tire circumferential direction, for example. Thereby, the electrical conductivity of the tire 1 is surely improved. The number of the electroconductive threads 10 in the tire side view is, for example, 4 to 12 from the point of view of improving the electrical conductivity and the air release property. However, it is not limited to such a mode.

As shown in FIG. 2, each of the electroconductive threads 10 is composed of one to three metal filaments 11, for example, and is composed of single metal filament 11 in the present embodiment. However, each of the electroconductive threads 10 may be composed of, for example, a larger number of metal filaments 11, or may be twisted together. Further, each of the electroconductive threads 10 may include the metal filament 11 and an organic fiber filament, which may be twisted together. The electroconductive threads 10 containing organic fiber filaments are easily compatible with the topping rubber of the carcass ply, and are useful for suppressing rubber delamination originating from the electroconductive thread 10.

In addition to being highly electroconductive, it is preferred that the metal filaments 11 deform moderately in response to tire deformation. Further, the metal filaments 11 are required to have high corrosion resistance, low cost, and easy procurement. From this point of view, it is preferred that the metal filaments 11 are made of stainless steel, for example. It should be noted that, in the present specification, stainless steel is defined in Japanese Industrial Standard JIS G 0203 and means alloy steel containing 1.2% or less of carbon and 10.5% or more of chromium.

It is preferred that the stainless steel used for the metal filaments 11 is ferritic stainless steel or austenitic stainless steel, for example. These stainless steels can exhibit excellent corrosion resistance and ductility, and can effectively suppress breakage of the metal filaments 11. It should be noted that ferritic stainless steel is a stainless steel whose main metallurgical structure is ferrite at room temperature. Austenitic stainless steel is stainless steel whose metallurgical structure is austenite at room temperature.

In particular, austenitic stainless steel is nonmagnetic, which means that the metal filaments are not magnetized even after long-term use of the tire. Therefore, the occurrence of radio interference due to the rotation of the tire is reliably suppressed.

The stress at 1% elongation of each of the metal filaments 11 is preferably 10 N or less, and more preferably 5 N or less. This can prevent the metal filaments 11 from damaging the surrounding rubber member due to deformation of the tire.

In order to more reliably exert the above effects, each of the metal filaments 11 has a stress of 25 N or less at 2% elongation, for example. The stress at 2% elongation of each of the metal filaments 11 is preferably 15 N or less, and more preferably 10 N or less.

It is preferred that the stress at 1% elongation of each of the metal filaments 11 is smaller than the stress at 1% elongation of each of the carcass cords (6c). Similarly, it is preferred that the stress at 2% elongation of each of the metal filaments 11 is smaller than the stress at 2% elongation of each of the carcass cords (6c). As a result, stress is not concentrated on the metal filaments 11 even when the tire is deformed, and thus breakage of the metal filaments 11 is effectively suppressed.

As shown in FIG. 2, a wire diameter (d1) of each of the metal filaments 11 is, for example, 0.03 to 1.00 mm, preferably 0.05 to 0.50 mm, more preferably 0.10 to 0.20 mm.

Each of the metal filaments 11 of the present embodiment has breaking strength (maximum stress at break) of 5 to 20 N.

In the case of the metal filaments 11 that are not corrugated and extend along the shape of the outer surface of the carcass ply 6A, it is preferred that the elongation at break of each of the metal filaments 11 is 20.0% to 40.0%. This further reliably suppresses breakage of the electroconductive threads 10. The metal filaments 11 may be corrugated so as to extend in a wavy shape.

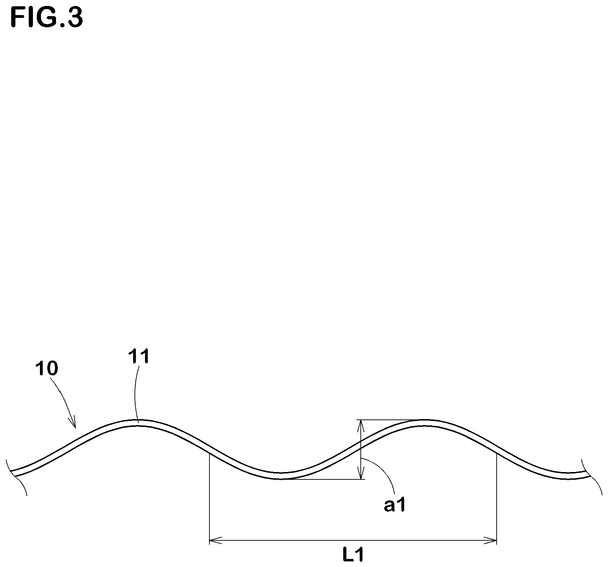

FIG. 3 shows an enlarged view of one of the metal filaments 11 extending in a wavy shape. As shown in FIG. 3, each of the metal filaments 11 of the present embodiment can be set to have a large elongation at break. Therefore, the metal filaments 11 of this embodiment extend appropriately in response to the deformation of the tire, and breakage thereof can be reliably suppressed.

Each of the metal filament 11 extends in a wave shape with an amplitude (a1) (peak-to-peak amplitude) of 2.0 mm or less, for example. It is preferred that the amplitude (a1) is 0.5 to 1.5 mm, for example. As a result, breakage of the metal filaments 11 is suppressed, and an increase in tire weight due to the metal filaments 11 is suppressed.

From a similar point of view, a wavelength L1 of each of the metal filaments 11 is 100 mm or less, for example. Specifically, it is preferred that the wavelength L1 is 3 to 70 mm.

In the case of the wavy metal filaments 11, it is preferred that the elongation at break of each of the metal filaments 11 is 80% to 160%. Therefore, breakage of the metal filaments is effectively suppressed.

As shown in FIG. 1, the tread portion 2 and the sidewall portions 3 are more deformed than the bead portions 4 during running. Therefore, the metal filaments 11 tend to be stretched significantly in the tread portion 2 and the sidewall portions 3. From this point of view, it is preferred that each of the metal filaments 11 has an amplitude larger in the tread portion 2 than in the bead portions 4. Further, it is preferred that each of the metal filaments 11 has the amplitude larger in the sidewall portions 3 than in the bead portions 4. As a result, while suppressing an increase in the tire weight due to the metal filaments 11, it is possible to effectively suppress breakage of the metal filaments 11 at portions where deformation is large.

While detailed description has been made of the tire according to an embodiment of the present invention, the present invention can be embodied in various forms without being limited to the illustrated embodiment.

### Working Example

Pneumatic tires for passenger cars of size 195/70R15 having the basic structure of FIG. 1 were made by way of test. As Reference 1, pneumatic tires having organic fiber filaments (PET) as the electroconductive threads were made by way of test. As References 2 and 3, pneumatic tires including the metal filaments each having the stress of more than 13 N at 1% elongation. The metal filaments of References 2 and 3 and Examples were made of stainless steel (SUS). Further, each of the test tires have nine electroconductive threads. Each of the test tires have substantially the same configuration except for the configuration of the electroconductive threads. Each of the test tires was tested for tire electrical resistance, the number of the electroconductive threads broken after running a predetermined distance, and the number of the electroconductive threads broken after running over a curb. The test methods were as follows.

### < Tire Electrical Resistance >

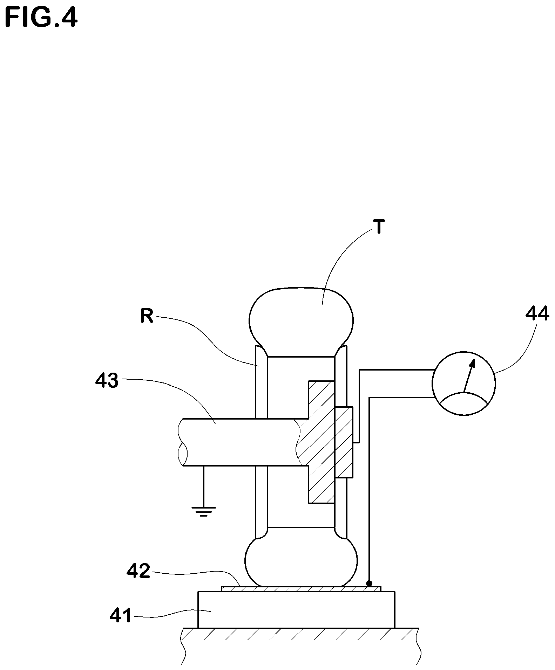

As shown in FIG. 4, the electrical resistance of the assembly of the test tire (T) and the tire rim (R) was measured in accordance with JATMA regulations by using a measuring device including a metal plate 42 with a polished surface (electrical resistance of 10 Ω or lower) placed on an insulating plate 41 (electrical resistance of 10¹² Ω or higher), an electroconductive tire mounting shaft 43 for holding the tire/rim assembly, and an electrical resistance measuring instrument 44. It should be noted that each of the test tires (T) was used in a sufficiently dried state, with the release agent and dirt on the surface being sufficiently removed in advance. Other conditions were as follows.
Rim material: aluminum alloy
Rim size: 15 x 6.0J
Tire inner pressure: 230 kPa
Tire load: 4.8 kN
Test environment temperature (test room temperature): 24°C
Humidity: 24%
Measuring range of electrical resistance measuring instrument: 1.0×10³ to 1.6×10¹⁶ Ω
Test voltage (applied voltage): 1000V

The procedure of the test was as follows.
(1) The test tire (T) was mounted on the rim to prepare a tire/rim assembly. At this time, soapy water was used as a lubricant for the contact area between the two.
(2) After leaving the tire/rim assembly in the test room for two hours, the assembly was mounted to the tire mounting shaft 43.
(3) The tire/rim assembly was subjected to the above tire load for 0.5 minutes, followed by an additional 0.5 minutes after release, and a further additional 2 minutes after release.
(4) After the test voltage is applied for five minutes, the electrical resistance between the tire mounting shaft 43 and the metal plate 42 was measured by the electrical resistance measuring instrument 44. The measurement was performed at four locations at intervals of 90 degrees in the tire circumferential direction, and the maximum value among them was taken as the electrical resistance value (measured value) of the tire (T).

It should be noted that the tire electrical resistance measurements described above were conducted with the unused tires.

### < Number of Electroconductive Threads Broken After Running Predetermined Distance >

After each test tire was run on a drum testing machine under the following conditions, the number of broken electroconductive threads containing metal filaments was confirmed by using an X-ray CT scanner.
Tire inner pressure: 150 kPa
Vertical load: 5.9 kN
Speed: 100 km/h
Running distance: 5000 km

### < Number of Electroconductive Threads Broken After Running over Curb >

For each test tire, the test tire was mounted on the following test vehicle, and the vehicle was driven at a predetermined speed to run over a curb repeatedly for a predetermined number of times. After that, the presence or absence of breakage of the electroconductive threads containing the metal filaments was confirmed by using an X-ray CT scanner.
Tire inner pressure: 230 kPa
Test vehicle: 1600 cc displacement, front-wheel drive
Test results are shown in Tables 1 and 2.

**Table 1**

| | | Reference 1 | Reference 2 | Reference 3 | Example 1 | Example 2 | Example 3 |
|---|---|---|---|---|---|---|---|
| Material of Electroconductive thread | | PET | SUS | SUS | SUS | SUS | SUS |
| Wire diameter of Filament | [mm] | 0.09 | 0.40 | 0.20 | 0.15 | 0.10 | 0.10 |
| With or without Corrugated processing | | Without | Without | Without | Without | Without | Without |
| Stress at 1% elongation | [N] | 0.10 | 34.1 | 15.0 | 6.2 | 3.4 | 3.4 |
| Stress at 2% elongation | [N] | 0.19 | 37.5 | 18.3 | 6.8 | 4.1 | 4.1 |
| Elongation at break | [%] | 14 | 36 | 36 | 36 | 33 | 33 |
| Number of Metal filament | | - | 8 | 8 | 1 | 1 | 2 |
| Tire electrical resistance | [Ω] | 4.8 x 10⁸ | 4.0 x 10⁴ | 3.3 x 10⁴ | 5.0 x 10⁴ | 3.8 x 10⁵ | 2.1 x 10⁵ |
| Number of Electroconductive thread broken after running predetermined distance | | - | 4 | 3 | 0 | 0 | 0 |
| Number of Electroconductive thread broken after running over curb | | - | 5 | 4 | 0 | 0 | 0 |

**Table 2**

| | | Example 4 | Example 5 | Example 6 | Example 7 | Example 8 |
|---|---|---|---|---|---|---|
| Material of Electroconductive thread | | SUS | SUS | SUS | SUS | SUS |
| Wire diameter of Filament | [mm] | 0.10 | 0.15 | 0.15 | 0.11 | 0.05 |
| With or without Corrugated processing | | Without | With (amplitude 0.5mm) | With (amplitude 1.5mm) | Without | Without |
| Stress at 1% elongation | [N] | 3.4 | 1.1 | 0.3 | 10.5 | 3.0 |
| Stress at 2% elongation | [N] | 4.1 | 2.1 | 0.6 | 20.6 | 5.4 |
| Elongation at break | [%] | 33 | 113 | 151 | 2.8 | 2.5 |
| Number of Metal filament | | 3 | 1 | 1 | 1 | 1 |
| Tire electrical resistance | [Ω] | 1.5 x 10⁵ | 8.3 x 10⁵ | 8.4 x 10⁵ | 2.7 x 10⁵ | 8.8 x 10⁵ |
| Number of Electroconductive thread broken after running predetermined distance | | 0 | 0 | 0 | 1 | 1 |
| Number of Electroconductive thread broken after running over curb | | 0 | 0 | 0 | 1 | 1 |

As shown in Tables 1 and 2, the tire in Reference 1, which includes the electroconductive threads made of PET, has a high electrical resistance. On the other hand, References 2 and 3 and Examples 1 to 8, which include the electroconductive threads made of SUS, have significantly lower electrical resistance. Further, it was confirmed that Examples 1 to 8 effectively suppressed breakage of the electroconductive threads containing the metal filaments.

## Claims

1. A pneumatic tire (1) having a carcass (6), wherein
the carcass (6) includes a carcass ply (6A) having carcass cords extending from one of bead portions (4) to the other one of the bead portions (4) through a tread portion (2),
at least one electroconductive thread (10) extending from the one of the bead portions (4) to at least the tread portion (2) is arranged on at least one of a radially outer surface and a radially inner surface of the carcass ply (6A), and
the electroconductive thread (10) includes a metal filament (11),
**characterized in that** the metal filament (11) has a stress of 13 N or less at 1 % elongation and breaking strength of 5 N to 20 N.

2. The pneumatic tire (1) according to claim 1, wherein the metal filament (11) has a stress of 25 N or less at 2 % elongation.

3. The pneumatic tire (1) according to claim 1 or 2, wherein the metal filament (11) has the stress at 1 % elongation smaller than a stress of each of the carcass cords at 1 % elongation.

4. The pneumatic tire (1) according to any one of claims 1 to 3, wherein the metal filament (11) has a stress at 2 % elongation smaller than a stress of each of the carcass cords at 2 % elongation.

5. The pneumatic tire (1) according to any one of claims 1 to 4, wherein the metal filament (11) is made of stainless steel.

6. The pneumatic tire (1) according to any one of claims 1 to 5, wherein the metal filament (11) has a wire diameter (d1) of 0.03 mm to 1.00 mm.

7. The pneumatic tire (1) according to any one of claims 1 to 6, wherein the metal filament (11) has an elongation at break of 20.0 % to 40.0 %.

8. The pneumatic tire (1) according to any one of claims 1 to 7, wherein the metal filament (11) extends in a wavy shape.

9. The pneumatic tire (1) according to any one of claims 1 to 8, wherein the metal filament (11) extends in a wavy shape with an amplitude (a1) of 2.0 mm or less.

10. The pneumatic tire (1) according to any one of claims 1 to 9, wherein
the metal filament (11) extends in a wavy shape, and
the metal filament (11) has an amplitude (a1) larger in the tread portion (2) than in the bead portions (4).

## Patentansprüche

1. Luftreifen (1) mit einer Karkasse (6), wobei
die Karkasse (6) eine Karkasslage (6A) mit Karkasskorden aufweist, die sich von einem der Wulstabschnitte (4) zu dem anderen der Wulstabschnitte (4) durch einen Laufflächenabschnitt (2) erstrecken,
mindestens ein elektrisch leitender Faden (10), der sich von dem einen der Wulstabschnitte (4) zu mindestens dem Laufflächenabschnitt (2) erstreckt, auf mindestens einer von einer radial äußeren Oberfläche und einer radial inneren Oberfläche der Karkasslage (6A) angeordnet ist, und
der elektrisch leitende Faden (10) ein Metallfilament (11) umfasst,
**dadurch gekennzeichnet, dass** das Metallfilament (11) eine Spannung von 13 N oder weniger bei 1 % Dehnung und eine Bruchfestigkeit von 5 N bis 20 N aufweist.

2. Luftreifen (1) nach Anspruch 1, wobei das Metallfilament (11) eine Spannung von 25 N oder weniger bei 2 % Dehnung aufweist.

3. Luftreifen (1) nach Anspruch 1 oder 2, wobei das Metallfilament (11) eine Spannung bei 1 % Dehnung aufweist, die kleiner als eine Spannung jedes der Karkasskorde bei 1 % Dehnung ist.

4. Luftreifen (1) nach einem der Ansprüche 1 bis 3, wobei das Metallfilament (11) eine Spannung bei 2 % Dehnung aufweist, die kleiner als eine Spannung jedes der Karkasskorde bei 2 % Dehnung ist.

5. Luftreifen (1) nach einem der Ansprüche 1 bis 4, wobei das Metallfilament (11) aus rostfreiem Stahl hergestellt ist.

6. Luftreifen (1) nach einem der Ansprüche 1 bis 5, wobei das Metallfilament (11) einen Drahtdurchmesser (d1) von 0,03 mm bis 1,00 mm aufweist.

7. Luftreifen (1) nach einem der Ansprüche 1 bis 6, wobei das Metallfilament (11) eine Bruchdehnung von 20,0 % bis 40,0 % aufweist.

8. Luftreifen (1) nach einem der Ansprüche 1 bis 7, wobei sich das Metallfilament (11) in einer gewellten Form erstreckt.

9. Luftreifen (1) nach einem der Ansprüche 1 bis 8, wobei sich das Metallfilament (11) in einer gewellten Form mit einer Amplitude (a1) von 2,0 mm oder weniger erstreckt.

10. Luftreifen (1) nach einem der Ansprüche 1 bis 9, wobei
sich das Metallfilament (11) in einer gewellten Form erstreckt, und
das Metallfilament (11) eine Amplitude (a1) aufweist, die in dem Laufflächenabschnitt (2) größer ist als in den Wulstabschnitten (4).

## Revendications

1. Bandage pneumatique (1) ayant une carcasse (6), dans lequel
la carcasse (6) inclut une nappe de carcasse (6A) ayant des câblés de carcasse s'étendant depuis l'une de portions de talon (4) jusqu'à l'autre des portions de talon (4) à travers une portion de bande de roulement (2),
au moins un fil électriquement conducteur (10), s'étendant depuis l'une des portions de talon (4) jusqu'à au moins la portion formant bande de roulement (2), est agencé sur l'une au moins d'une surface radialement extérieure et d'une surface radialement intérieure de la nappe de carcasse (6A), et
le fil électriquement conducteur (10) inclut un filament métallique (11),
**caractérisé en ce que** le filament métallique (11) a une contrainte de 13 N ou moins à 1 % d'allongement et une résistance à la rupture de 5 N à 20 N.

2. Bandage pneumatique (1) selon la revendication 1, dans lequel le filament métallique (11) a une contrainte de 25 N ou moins à 2% d'allongement.

3. Bandage pneumatique (1) selon la revendication 1 ou 2, dans lequel le filament métallique (11) a la contrainte à 1 % d'allongement inférieure à une contrainte de chacun des câblés de carcasse à 1 % d'allongement.

4. Bandage pneumatique (1) selon l'une quelconque des revendications 1 à 3, dans lequel le filament métallique (11) a une contrainte pour un allongement de 2 % inférieure à une contrainte de chacun des câblés de carcasse à 2 % d'allongement.

5. Bandage pneumatique (1) selon l'une quelconque des revendications 1 à 4, dans lequel le filament métallique (11) est fabriqué en acier inoxydable.

6. Bandage pneumatique (1) selon l'une quelconque des revendications 1 à 5, dans lequel le filament métallique (11) a un diamètre de fil (d1) de 0,03 mm à 1,00 mm.

7. Bandage pneumatique (1) selon l'une quelconque des revendications 1 à 6, dans lequel le filament métallique (11) a un allongement à la rupture de 20,0 % à 40,0 %.

8. Bandage pneumatique (1) selon l'une quelconque des revendications 1 à 7, dans lequel le filament métallique (11) s'étendant dans une forme ondulée.

9. Bandage pneumatique (1) selon l'une quelconque des revendications 1 à 8, dans lequel le filament métallique (11) s'étend dans une forme ondulée avec une amplitude (a1) de 2,0 mm ou moins.

10. Bandage pneumatique (1) selon l'une quelconque des revendications 1 à 9, dans lequel
le filament métallique (11) s'étendant dans une forme ondulée, et
le filament métallique (11) a une amplitude (a1) plus grande dans la portion formant bande de roulement (2) que dans les portions de talon (4).
